# EUROPEAN PATENT APPLICATION

(11) **EP 3 228 832 A1**
(43) Date of publication of application: **11.10.2017**
(21) Application number: 17164225.9
(22) Date of filing: 31.03.2017
(51) Int. Cl.: F01D 21/00, F02C 7/232

(54) **FUEL ECOLOGY SYSTEM**

(30) Priority: 06.04.2016 US 201615091793
(71) Applicant: Hamilton Sundstrand Corporation, Charlotte, NC 28217-4578 (US)
(72) Inventor: CARPENTER, Richard J., Gales Ferry, CT 06335 (US); GIBBONS, Kevin, Torrington, CT 06790 (US); BHADANGE, Sushant S., Vernon, CT 06066 (US); RIBAROV, Lubomir A., West Hartford, CT 06107 (US); NORTHROP, Eric, The Villages, FL 32163 (US)
(74) Representative: Iceton, Greg James

(57) **Abstract**

A fuel ecology system (100) includes a fuel ecology reservoir (120) having a reservoir volume, includes a moveable barrier (130) disposed within the reservoir volume, the movable barrier (130) defining a first volume (122) and a second volume (124) within the reservoir volume, a fuel inlet port (121) in fluid communication with the first volume (122), a fuel outlet port (123) in fluid communication with the first volume (122), and a vent port (125) in fluid communication with the second volume (124).

## Description

### BACKGROUND

The subject matter disclosed herein relates to fuel ecology systems, and more particularly, fuel ecology systems for an aircraft.

Fuel ecology systems are utilized within an aircraft to minimize liquid and vapor fuel outflows immediately following an engine shutdown. Fuel ecology systems can further reintroduce unused fuel to the engine when engine operation is resumed. Often, fuel ecology systems may require numerous components and may leak excess liquid fuel.

### BRIEF SUMMARY

According to an embodiment, a fuel ecology system includes a fuel ecology reservoir having a reservoir volume, includes a moveable barrier disposed within the reservoir volume, the movable barrier defining a first volume and a second volume within the reservoir volume, a fuel inlet port in fluid communication with the first volume, a fuel outlet port in fluid communication with the first volume, and a vent port in fluid communication with the second volume.

According to an embodiment, a method to store fuel, the method includes shutting off an engine having an engine fuel inlet and an engine fuel outlet, providing a fuel ecology reservoir having a moveable barrier disposed within a reservoir volume, defining a first volume and a second volume within the reservoir volume via the moveable barrier, and receiving fuel in the first volume from the engine fuel outlet via a fuel inlet port.

According to an embodiment, a fuel ecology system includes an engine having an engine fuel inlet and an engine fuel outlet; and a fuel ecology reservoir having a reservoir volume, including a moveable barrier disposed within the reservoir volume, the movable barrier defining a first volume and a second volume within the reservoir volume, a fuel inlet port in fluid communication with the first volume to receive fuel from the engine fuel outlet, a fuel outlet port in fluid communication with the first volume to provide fuel to the engine fuel inlet, and a vent port in fluid communication with the second volume.

Technical function of the embodiments described above includes the movable barrier defining a first volume and a second volume within the reservoir volume, a fuel inlet port in fluid communication with the first volume, and a fuel outlet port in fluid communication with the first volume.

Other aspects, features, and techniques of the embodiments will become more apparent from the following description taken in conjunction with the drawings.

### BRIEF DESCRIPTION OF THE DRAWINGS

The subject matter is particularly pointed out and distinctly claimed in the claims at the conclusion of the specification. The foregoing and other features, and advantages of the embodiments are apparent from the following detailed description by way of example only taken in conjunction with the accompanying drawings in which like elements are numbered alike in the FIGURES:
FIG. 1A is a schematic view of one embodiment of a fuel ecology system with the first chamber expanded;
FIG. 1B is a schematic view of the fuel ecology system of FIG. 1A with the first chamber contracted;
FIG. 2A is a schematic view of another embodiment of a fuel ecology system with the first chamber expanded;
FIG. 2B is a schematic view of the fuel ecology system of FIG. 2A with the first chamber contracted; and
FIG. 3 is a flow diagram of an embodiment of a method to store fuel.

### DETAILED DESCRIPTION

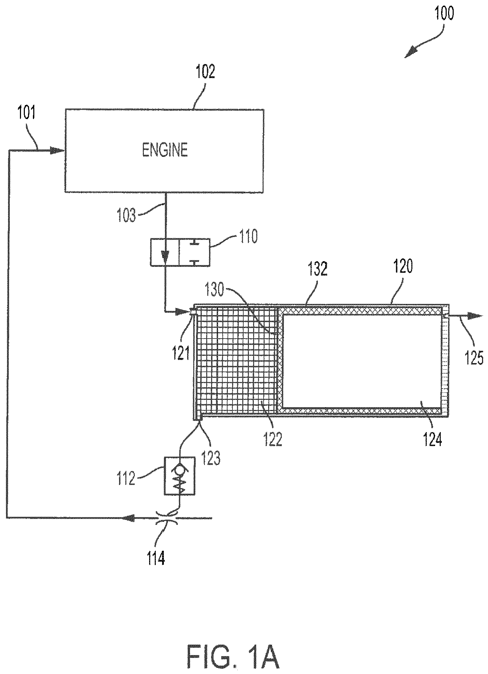

Referring to the drawings, FIG. 1A shows a fuel ecology system 100. In the illustrated embodiment, the fuel ecology system 100 includes an engine 102, a fuel ecology reservoir 120, a shutoff valve 110, a check valve 112, and an ejector pump 114. In the illustrated embodiment, the fuel ecology system 100 can capture and release fuel outflows, such as fuel vapor, liquid fuel, etc. from the engine 102. Advantageously, the fuel ecology system 100 can collect fuel outflows (liquid and vapor) from the engine 102 as the engine 102 is shut down, and then port the collected liquid fuel back to the engine 102 when engine operation is resumed. Advantageously, the fuel ecology system 100 can minimize components required and minimize weight.

In the illustrated embodiment, the engine 102 can be any suitable engine for use in an aircraft. In certain embodiments, the engine 102 is a gas turbine engine or any other suitable type of engine. Often, after the engine 102 is shut down, the engine's fuel pump(s) may continue to provide pressurized fuel flow to a combustion chamber or area of the engine 102, causing unburned fuel to collect in the engine's combustor. In certain embodiments, excess fuel and fuel vapors can exit the engine 102 via the engine fuel outlet 103 thus creating unwanted fuel outflows. In the illustrated embodiment, the engine fuel outlet 103 is connected to the fuel ecology reservoir 120. The engine 102 can receive fuel from a fuel system (not shown) via the fuel engine inlet 101. The fuel engine inlet 101 can be attached to any suitable portion of the fuel system.

In the illustrated embodiment, the fuel ecology reservoir 120 includes a piston 130, a first volume 122, a second volume 124, a fuel inlet port 121, a fuel outlet port 123, and a vent port 125. The fuel ecology reservoir 120 has an interior volume that can collect fuel that is unburned or otherwise emitted from the engine 102 to prevent smoking (i.e., visible exhaust) upon engine re-start and liquid fuel outflows. Further, the fuel ecology reservoir 120 can further allow fuel to be reclaimed by the engine 102 as engine operation is resumed. In certain embodiments, the fuel ecology reservoir 102 is located in an aircraft location with a temperature to prevent the varnishing of fuel. Advantageously, the fuel ecology reservoir 120 is a simplified construction to minimize weight and increase fire resistance. In certain embodiments, the fuel ecology reservoir 120 is formed of metal or any other suitable material. The fuel ecology reservoir 120 can be formed in any suitable shape.

In the illustrated embodiment, the piston 130 is disposed within an interior volume of the fuel ecology reservoir 120. The piston 130 can act as a moveable barrier that defines a first volume 122 and a second volume 124. In the illustrated embodiment, the piston 130 can move in response to differential pressure either provided by the engine 102 via the engine fuel outlet 103 or the suction pressure provided by the ejector pump 114. In certain embodiments, the piston 130 can include seals 132 to seal the sides of the piston 130 against the fuel ecology reservoir 120. The seals 132 can be dynamic seals to prevent the migration of vapors of fluids into the second volume 124 or the atmosphere via the vent port 125. In certain embodiments, the seals 132 can include scraper seals. The scraper seals can keep the dynamic seal free of debris to prevent damage to the dynamic seal. In certain embodiments, the seals 132 can guide the piston 130 through the travel range. In certain embodiments, an additional bushing can further guide the piston 130 through the travel range.

In the illustrated embodiment, the first volume 122 includes a fuel inlet port 121 and a fuel outlet port 123. The first volume can collect excess fluid from the engine 102 via the fuel inlet port 121. In certain embodiments, a shutoff valve 110 can selectively control the fuel flow from the engine 102 to the fuel inlet port 121. The shutoff valve 110 can be selectively engaged and disengaged to prevent back flow of fuel from the first volume 122 to the engine 102 and to permit fuel flow as desired. In certain embodiments, the shutoff valve 110 is a scheduled device such as solenoid valve to allow active opening and closing of the fuel circuit.

In the illustrated embodiment, the fuel outlet port 123 can allow for the outflow of fuel from the first volume 122. In certain embodiments, the fuel outlet port 123 is in fluid communication with a check valve 112 to prevent the unintentional backflow of fuel through the fuel outlet port 123 into the first volume 122. In the illustrated embodiment, an ejector pump 114 can create a differential pressure to remove fuel from the first volume 122. The ejector pump 114 can be any suitable pump and can be located in any portion of the fuel system.

In the illustrated embodiment, the second volume 124 is disposed on the opposite side of the piston 130. The second volume 124 is in fluid communication with the environment or atmospheric pressure via the vent port 125. The vent port 125 allows for atmospheric pressure to act upon the second volume 124 side of the piston 130 to create the desired pressure differential. Advantageously, the piston 130 or any other suitable moveable barrier prevents any excess fuel from being spilled or otherwise released via the vent port 125.

In operation the fuel ecology system 100 can receive and provide fuel. Referring to FIG. 1A, the fuel ecology system 100 is shown to receive fuel from a recently shut down engine 102. In the illustrated embodiment, unburned fuel and fuel vapors from the engine 102 are provided through the engine fuel outlet 103. In certain embodiments, pressure from the burner of the engine 102 as reacted through the nozzle manifold system of the engine 102 is further provided through the engine fuel outlet 103. The shutoff valve 110 allows for flow into the fuel inlet port 121. In the illustrated embodiment, the engine 102 provides fuel pressure to fill the first volume 122 with fuel and fuel vapor. As the shutoff valve 110 is opened, the burner pressure within the engine 102 is still higher than atmospheric pressure, but lower than the pressure keeping the check valve 112 closed. As additional fuel vapor and liquid fuel enters the first volume 122 at greater than ambient or atmospheric pressure, the piston 130 is translated to increase or expand the first volume 122 and reduce the size of the second volume 124. The pressure differential and flow differential overcomes seal 132 friction to allow the piston 130 to translate. Advantageously, the piston 130 prevents excess fuel from escaping through the vent port 125.

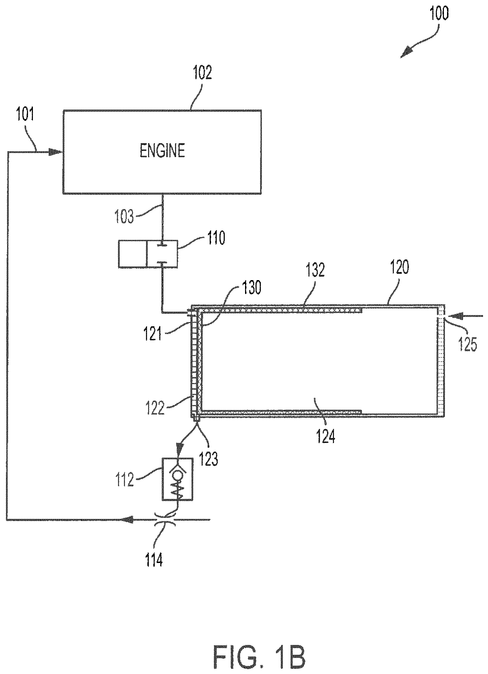

Referring to FIG. 1B, the fuel ecology system 100 is shown to provide fuel to the engine 102 during engine operation. In the illustrated embodiment, the shutoff valve 110 is closed to prevent backflow of fuel into the fuel ecology reservoir 120 and the first volume 122 via the fuel inlet port 121. During engine 102 operation, the ejector pump 114 is engaged to provide a suction pressure lower than atmospheric pressure to draw fuel out of the first volume 122. The check valve 112 is opened to allow for fuel to flow out of the first volume 122 but prevents the back flow of fuel into the first volume 122 via the fuel outlet port 123. As fuel is drawn out of the first volume 122, the fuel is sent to the engine 102 via the ejector pump 114 and the engine fuel inlet 101. Fuel can be passed through the fuel system directly or indirectly or via any suitable manner. As fuel is drawn out of the first volume 122, the pressure differential between the first volume 122 and the atmospheric pressure of the second volume 124 via the vent port 125 allows the piston 130 to translate to reduce or contract the size of the first volume 122 and increase the size of the second volume 124. In the illustrated embodiment, the first volume 122 can include stops (not shown) to prevent the piston 130 from being vacuum locked due to capillary action at the end of piston travel. Liquid fuel and fuel vapor that were captured are consumed by the combustors of the engine 102 upon resuming of engine operation.

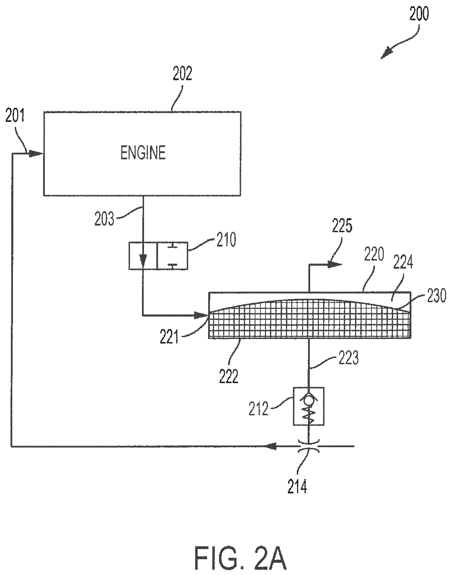

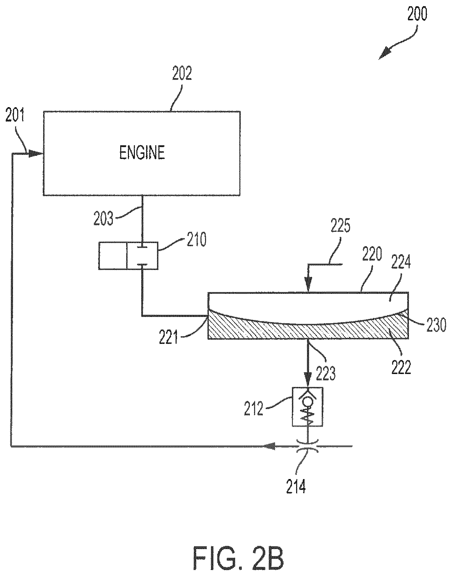

Referring to FIGS. 2A and 2B, an alternative embodiment of a fuel ecology system 200 is shown. In FIGS. 2A and 2B, reference numerals shown correspond to similar reference numerals shown in FIGS. 1A and 1B. In the illustrated embodiment, the moveable barrier is a diaphragm 230. The diaphragm 230 can be a moveable barrier that deflects to adjust the size of the first volume 222 and the second volume 224. In the illustrated embodiment, the diaphragm 230 can be a bellows or a smooth diaphragm. In certain embodiments, the diaphragm is formed of a metallic material such as stainless steel or any other suitable material. In certain embodiments, the diaphragm 230 can be welded to the interior volume of the fuel ecology reservoir 220. In certain embodiments, the diaphragm 230 can act as a bi-stable spring. In FIG 2A, the fuel ecology system 200 is shown to collect liquid fuel and fuel vapors form a shut-down engine 202. In FIG. 2B, the fuel ecology system 200 is shown to provide fuel to the engine 202 during engine operation. Advantageously, the fuel ecology system 200 can provide a fireproof fuel ecology system that can further operate without sliding components to minimize the effects of fuel coking/varnishing conditions.

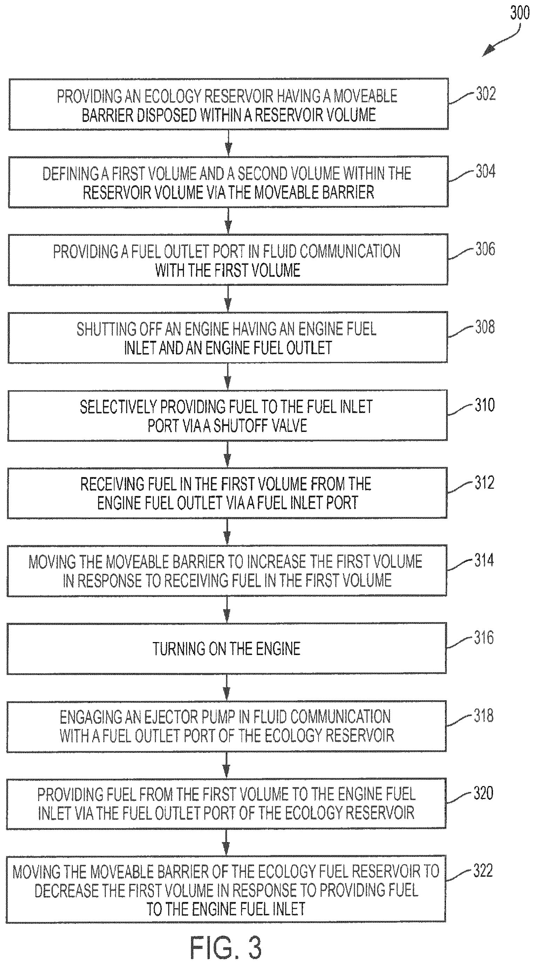

Referring to FIG. 3, a method 300 for storing fuel and fuel vapor is shown. In operation 302, a fuel ecology reservoir having a moveable barrier disposed within a reservoir volume is provided. In the illustrated embodiment, the moveable barrier is a piston is disposed within an interior volume of the fuel ecology reservoir. In certain embodiments, the moveable barrier is a diaphragm. In operation 304, a first volume and a second volume within the reservoir volume is defined via the moveable barrier. The piston can act as a moveable barrier that defines a first volume and a second volume. In the illustrated embodiment, the piston can move in response to fuel pressure either provided by the engine via the engine fuel outlet or the suction pressure provided by the ejector pump. In certain embodiments, can be a moveable barrier can be a diaphragm that deflects to adjust the size of the first volume and the second volume.

In operation 306, a fuel outlet port in fluid communication with the first volume is provided. In the illustrated embodiment, the fuel outlet port can allow for the outflow of fuel from the first volume. In certain embodiments, the fuel outlet port is in fluid communication with a check valve to prevent the unintentional backflow of fuel through the fuel outlet port into the first volume. In operation 308, an engine having an engine fuel inlet and an engine fuel outlet is shut off. In the illustrated embodiment, the engine can be shut off after operation of the aircraft or when an operator desires to shut off a single engine of a multi-engine aircraft.

In operation 310, fuel to the fuel inlet port is selectively provided via a shutoff valve. The shutoff valve can be selectively engaged and disengaged to prevent back flow of fuel from the first volume to the engine and to permit fuel flow as desired. In operation 312, fuel in the first volume from the engine fuel outlet is received via a fuel inlet port.

In operation 314, the moveable barrier is moved to increase the first volume in response to receiving fuel in the first volume. As additional fuel vapor and liquid fuel enters the first volume, the moveable barrier is translated to increase or expand the first volume and reduce the size of the second volume. Advantageously, the moveable barrier prevents excess fuel from escaping through the vent port. Fuel can continue to be accumulated until engine operations are resumed.

In operation 316, the engine is turned on. In the illustrated embodiment, the engine operation can be resumed for any suitable purpose, such as resuming operation of an aircraft or an operator requiring additional thrust, etc.

In operation 318, an ejector pump in fluid communication with a fuel outlet port of the ecology reservoir is engaged. In the illustrated embodiment, an ejector pump can create suction pressure to remove fuel from the first volume. The ejector pump can be any suitable pump and can be located in any portion of the fuel system. In certain embodiments, a check valve allows for fuel to flow out of the first volume but prevents the back flow of fuel into the first volume via the fuel outlet port.

In operation 320, fuel from the first volume to the engine fuel inlet is provided via the fuel outlet port of the ecology fuel reservoir. As fuel is drawn out of the first volume, the fuel is sent to the engine via the engine fuel inlet.

In operation 322, the moveable barrier of the ecology fuel reservoir is moved to decrease the first volume in response to providing fuel to the engine fuel inlet. As fuel is drawn out of the first volume, the pressure differential between the first volume and the atmospheric pressure of the second volume via the vent port allows the piston to translate to reduce or contract the size of the first volume and increase the size of the second volume. Liquid fuel and fuel vapor that were captured are consumed by the engine's combustor.

The terminology used herein is for the purpose of describing particular embodiments only and is not intended to be limiting of the embodiments. While the description of the present embodiments has been presented for purposes of illustration and description, it is not intended to be exhaustive or limited to the embodiments in the form disclosed. Many modifications, variations, alterations or substitutions not hereto described will be apparent to those of ordinary skill in the art without departing from the scope of the embodiments. Additionally, while various embodiments have been described, it is to be understood that aspects may include only some of the described embodiments. Accordingly, the embodiments are not to be seen as limited by the foregoing description, but are only limited by the scope of the appended claims.

## Claims

1. A fuel ecology system (100), comprising:
a fuel ecology reservoir (120) having a reservoir volume, comprising:
a moveable barrier (130) disposed within the reservoir volume, the movable barrier defining a first volume (122) and a second volume (124) within the reservoir volume;
a fuel inlet port (121) in fluid communication with the first volume (122);
a fuel outlet port (123) in fluid communication with the first volume (122); and
a vent port (125) in fluid communication with the second volume (124).

2. The fuel ecology system of claim 1, wherein the fuel inlet port (121) receives an inlet fuel flow.

3. The fuel ecology system of claim 2, further comprising a shutoff valve (110) in fluid communication with the fuel inlet port (121) to selectively provide the inlet fuel flow to the fuel inlet port (121).

4. The fuel ecology system of claim 2, wherein the inlet fuel flow moves the moveable barrier (130) to increase the first volume (122).

5. The fuel ecology system of claim 1, wherein the fuel outlet port (123) provides an outlet fuel flow.

6. The fuel ecology system of claim 5, further comprising a check valve (112) in fluid communication with the fuel outlet port (123).

7. The fuel ecology system of claim 5, wherein the outlet fuel flow moves the moveable barrier (130) to decrease the first volume (122).

8. The fuel ecology system of claim 5, further comprising an ejector pump (114) in fluid communication with the fuel outlet port (123) to provide the outlet fuel flow.

9. The fuel ecology system of claim 8, wherein the ejector pump (114) is selectively engaged.

10. The fuel ecology system of claim 1, wherein the vent port (125) is in fluid communication with an atmosphere.

11. The fuel ecology system of claim 1, wherein the moveable barrier (130) is a piston disposed within the reservoir volume.

12. A method to store fuel, the method comprising:
shutting off an engine having an engine fuel inlet and an engine fuel outlet;
providing a fuel ecology reservoir having a moveable barrier disposed within a reservoir volume;
defining a first volume and a second volume within the reservoir volume via the moveable barrier; and
receiving fuel in the first volume from the engine fuel outlet via a fuel inlet port.

13. The method of claim 12, further comprising:
providing a fuel outlet port in fluid communication with the first volume;
engaging an ejector pump in fluid communication with a fuel outlet port; and
providing fuel from the first volume to the engine fuel inlet via the fuel outlet port.

14. The method of claim 12, further comprising:
selectively providing fuel to the fuel inlet port via a shutoff valve.

15. The method of claim 12, further comprising:
moving the moveable barrier to increase the first volume in response to receiving fuel in the first volume.
